# EUROPEAN PATENT APPLICATION

(11) **EP 3 086 013 A1**
(43) Date of publication of application: **26.10.2016**
(21) Application number: 15164925.8
(22) Date of filing: 23.04.2015
(51) Int. Cl.: F16L 25/12, F16L 27/10, F16L 27/107

(54) **JOINT STRUCTURE**

(71) Applicant: Aishin Industrial Corporation, Tokyo 110-0016 (JP); Lardieri, Salvatore, 55011 Altopascio (IT)
(72) Inventor: Lardieri, Salvatore, 55011 Altopascio (IT); Nishitani, Hirohisa, Tokyo 110-0016 (JP)
(74) Representative: Modiano, Micaela Nadia

(57) **Abstract**

A joint structure for connecting a primary-side cylindrical short pipe (1a) and a secondary-side cylindrical short pipe (1) to each other through which an object to be conveyed passes using a flexible cylindrical tube (3), wherein annular expansion portions (4, 4a) are formed integrally with opening edges facing each other on the primary-side and secondary-side cylindrical short pipes (1a, 1) to have a larger dimension than an outer diameter of each of the cylindrical short pipes, respectively, outer wall faces of the expansion portions are configured such that diameters thereof are gradually reduced from openings, respectively, and end portions of the flexible cylindrical tube are attached to be covered on outer faces of the expansion portions (4, 4a), respectively.

## Description

### [Technical Field]

The present invention relates to a joint structure, in particular, improvement of a joint structure in which primary-side and secondary-side cylindrical short pipes (spigots) are connected to each other by a flexible tube when powder or granular materials are dropped from a storage hopper and then are conveyed to a process of next step.

### [Related Art]

From the past, in order to drop powder or granular materials from a discharge port by own weight or by giving positive or negative air pressure from a hopper, to receive the powder or granular materials dropped and discharged by a rotary valve (feeder) having a plurality of equally-divided pockets, and to convey (delivery) the received powder or granular materials from the rotary valve to a next process by a prescribed amount, cylindrical short pipes are disposed at a lower side of the rotary valve and a top of the next process, respectively, and respective openings facing each other of the respective cylindrical short pipes are connected to each other by a flexible tube.

In addition, conventionally, openings of the flexible tube were fitted into opening edges of the cylindrical short pipes, the connection outer peripheral surface thereof was clamped and fixed with a metal band having spring property, and a heat seal was performed on the metal band to wrap it as needed. In order to impart force of strongly and tightly pressing the opening edges of the flexible tube onto the outer wall surfaces of the cylindrical short pipes to have shape-holding property, furthermore, the metal band having the spring property is attached. In this case, however, very large force is required during attachment and detachment, particularly, for removing. Moreover, in this case, the required force increases as the diameter of the pipe or tube becomes smaller, and thus the detachment would not be performed by hand working.

When the heat seal is performed, there is a concern that the cylindrical short pipe or the flexible tube is damaged and is also perforated. When the perforation occurs, leakage of powder or granular materials passing through the inside thereof also occurs to the outside.

Furthermore, as described above, in the case of not removing the flexible tube from the cylindrical short pipes, a case where the flexible tube should be forcibly detached from the cylindrical short pipes by drilling holes in the cylindrical short pipes and pressing it from the outside using a rod such as a driver also occurs.

### [Patent Document]

Applicants have investigated the prior art related to the present application invention, but could not found patent documents which are particularly related and similar to the present invention.

### [Summary of Invention]

### [Problems to be Solved by the Invention]

Problems to be solved by the present invention is that conventionally there are no joint structures capable of performing attachment/detachment work of a flexible tube with easy operation and without particular power in structures in which primary-side and secondary-side cylindrical short pipes for conveying an object to be conveyed, particularly, powder or granular materials are connected to each other by a flexible tube.

### [Means for Solving the Problems]

In order to solve the above problems, the joint structure according to the present invention is characterized by a joint structure for connecting a primary-side cylindrical short pipe and a secondary-side cylindrical short pipe to each other through which an object to be conveyed passes using a flexible cylindrical tube, wherein annular expansion portions are formed integrally with opening edges facing each other on the primary-side and secondary-side cylindrical short pipes to have a larger dimension than an outer diameter of each of the cylindrical short pipes, respectively; outer wall faces of the expansion portions are configured such that diameters thereof are gradually reduced from openings, respectively; end portions of the flexible cylindrical tube are attached to be covered on outer faces of the expansion portions, respectively.

In addition, according to the joint structure of the present invention, the expansion portions are characterized by being formed of a solid material and are configured to have step portions formed at inner edges of openings thereof, respectively, and dovetail grooves formed in the step portions thereof, respectively, thereby including connectors made of a flexible material which are fitted airtightly with the step portions and the dovetail grooves and allow outer end faces to airtightly abut on opening edges of the expansion portions, respectively; the connectors are characterized by being molded by silicon, respectively; the connectors are characterized by being provided integrally with inner surfaces in the vicinity of openings of the flexible tube; and annular projections are characterized by being formed at outer surfaces of the expansion portions, respectively, to prevent the flexible cylindrical tube from slipping off.

Moreover, according to the joint structure of the present invention, the expansion portions are characterized by being formed in a manner of winding widened opening edges outward; the flexible cylindrical tube is characterized by including annular padding portions for reinforcement on both of opening edges thereof; and the cylindrical short pipes are characterized by being formed of stainless steel, respectively.

### [Effects of the Invention]

The joint structure according to the present invention is configured as described above. Therefore, attachment and detachment work of the flexible tube is performed by one touch operation, the attachment is finished in a manner that the opening is turned to contact and fit with/into the expansion portions of the cylindrical short pipes and then is restored, and the detachment is performed in a procedure reverse to the above procedure. Therefore, excessive force is also not necessary, and the flexible tube or the cylindrical short pipe would not be damaged.

In addition, for such a configuration, the cylindrical short pipe itself is also formed in a simple structure, and grooves or the like for attaching an O-ring or packing are also not necessary. In combination with the above structure, the joint structure of the present invention can configure a conveying path of an object with good accuracy and can be supplied to consumers at inexpensive prices.

### [Brief Description of Drawings]

Fig. 1 is a longitudinal cross-sectional view illustrating a first embodiment of the present invention.
Fig. 2 is an expanded view illustrating a main portion in detail.
Fig. 3 is a longitudinal cross-sectional view illustrating a second embodiment.
Fig. 4 is an expanded view illustrating a main portion in detail.

### [Embodiments of the Invention]

The present invention is realized by a configuration as illustrated in the drawings and described in the following.

### [First Embodiment]

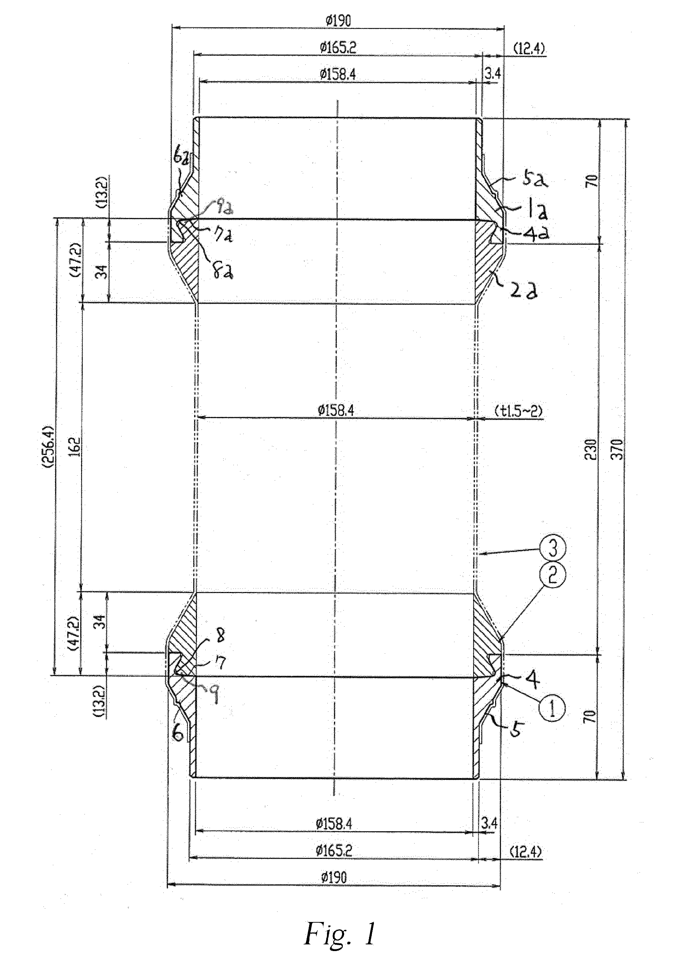

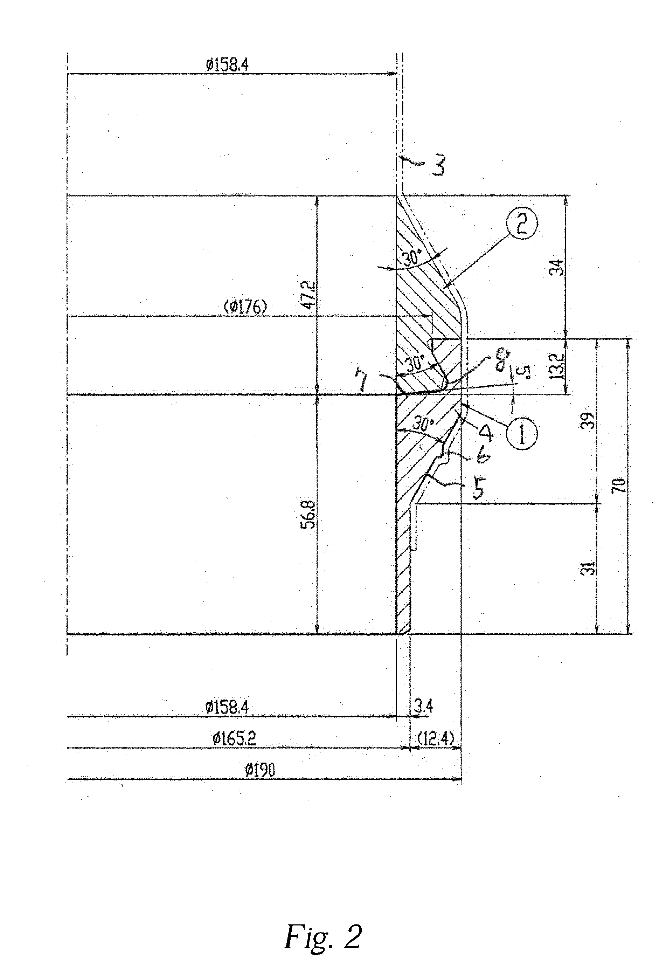

A first embodiment of the present invention will be described below with reference to Figs. 1 and 2. In Figs. 1 and 2, reference numerals 1 and 1a represent a cylindrical short pipe (spigot or adapter), wherein reference numeral 1a is, for example, a primary-side cylindrical short pipe which is configured to receive powder or granular materials dropped and discharged from a rotary valve provided at a lower discharge port of a hopper for storing the powder or granular materials therein and to convey the received powder or granular materials downward and reference numeral 1 is a secondary-side cylindrical short pipe which is configured to send powder or granular materials passed through a flexible tube 3 to be described below into a next process, for example, a bag-filling process or the like for commercialization. Each of two cylindrical short pipes 1 and 1a is molded by stainless steel in this embodiment.

Opening edges of the cylindrical short pipes 1 and 1a are formed integrally with expansion portions 4 and 4a, respectively, the opening edges facing each other. The expansion portions 4 and 4a have larger outer diameters than the cylindrical short pipes 1 and 1a, respectively, and are formed with tapered faces 5 and 5a, respectively, in which a diameter size of each outer wall face thereof is gradually reduced from an opening side.

In addition, annular projections 6 and 6a of a ridge-shape cross-section are formed integrally with parts of the tapered faces 5 and 5a, respectively, such that a flexible tube 3 to be described below is prevented from slipping off when being attached.

Moreover, step portions 7 and 7a are formed inside the openings of the expansion portions 4 and 4a, respectively, and dovetail grooves 8 and 8a followed by the step portions 7 and 7a are formed at the opening edge sides, respectively.

Meanwhile, in the drawings, reference numeral 3 represents a flexible tube, which is formed into a cylindrical shape with silicon rubber in this Embodiment. Openings on both sides of the flexible tube 3 widen in the vicinity thereof to be adapted for the expansion portions 4 and 4a described above, respectively. Then, connectors 2 and 2a molded by silicon rubber which is the same material as the flexible tube 3 are formed integrally with the flexible tube 3 on inner surfaces in the vicinity of the widened openings thereof. This integral molding is performed using a mold.

The above-described connectors 2 and 2a allows the step portion 7 and a front end face of the expansion portions 4 and 4a to tightly abut on each other, protrusion portions 9 and 9a which bite into the dovetail groove 8 are formed, and the connectors 2 and 2a have a top face of a flat ridge-shaped cross-section in the state of abutting on the expansion portions 4 and 4a.

The flexible tube 3 has a length to the extent that the flexible tube envelops the connectors 2 and 2a abutting on the opening edges on both sides and the entire of the expansion portions 4 and 4a with an outer surface thereof and the length thereof ranges from a base end of the expansion portions 4 and 4a to an outer peripheral surface of the cylindrical short pipes 1 and 1a.

### [Second Embodiment]

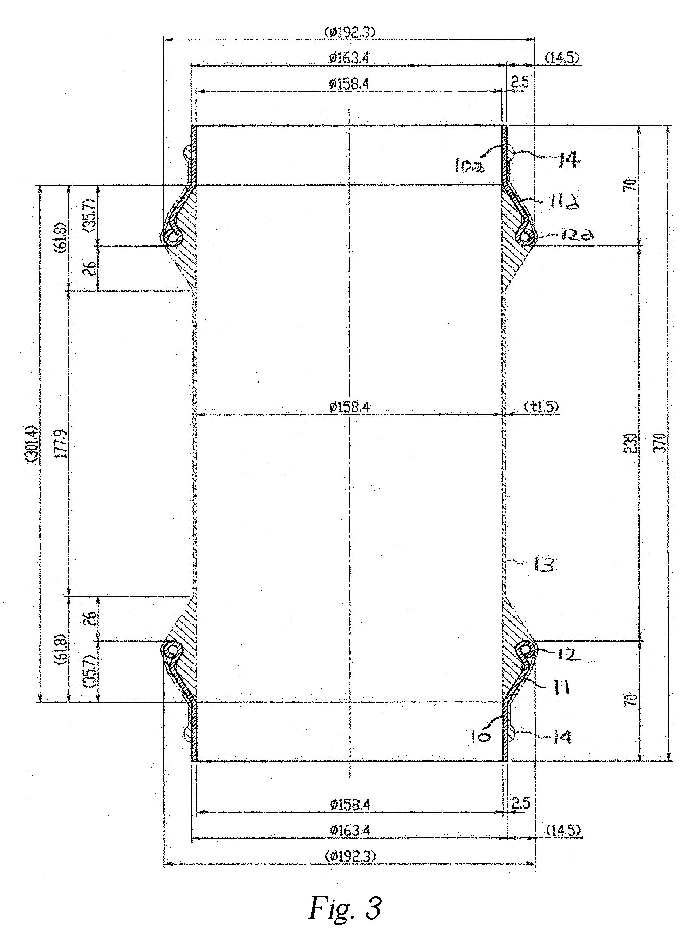

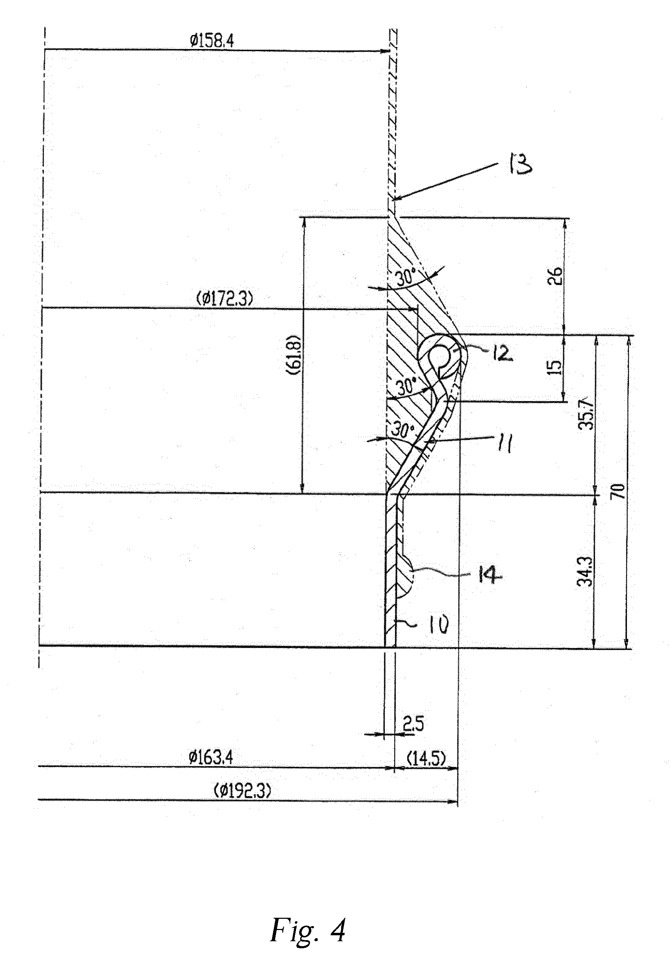

Subsequently, a second embodiment of the present invention will be described with reference to Figs. 3 and 4. In these drawings, reference numerals 10 and 10a represent a cylindrical short pipe and the cylindrical short pipes 10 and 10a in this case are also molded by stainless steel. The cylindrical short pipes 10 and 10a are formed integrally with expansion portions 11 and 11 a, respectively, in which opening edges facing each other are widened in a trumpet shape, and the opening edges of the expansion portions 11 and 11a are wound outward, thereby forming annular ring portions 12 and 12a. If the annular ring portions are formed by opening edges wound inward, there is a concern of being caught by powder or granular materials passing through the inside. For this reason, when the opening edges are wound outward, the slipping-off of a flexible tube 13 can be prevented and the opening edges may not be damaged by being caught on the flexible tube 13.

In addition, the flexible tube 13 according to the second embodiment is molded by silicon rubber as in the first embodiment, but padding portions 14 and 14 for reinforcement are annually formed at both of opening edges thereof and the padding portions 14 and 14 have a size of a length leading to outer wall faces which are base ends of the expansion portions 11 and 11a of the cylindrical short pipes 10 and 10a, respectively. Moreover, the flexible tube comes in contact with the annular ring portions 12 and 12a of the expansion portions 11 and 11a in state of being wound outward using the padding portions 14 and 14 as an axis and can be easily attached by rewinding.

### [Industrial Availability]

The joint structures according to the present embodiments are configured as described above. The present embodiments describe cases of conveying the powder or granular materials from the top to the bottom through the rotary valve (feeder) from the hopper for storing the powder or granular materials as an example, but a case of conveying the powder or granular materials in a transverse direction, an oblique direction, or from the bottom to the top may be also applied without being limited to such configurations and the object can be also a gas or a liquid fluid without being limited to the powder or granular materials.

In addition, the material of the cylindrical short pipe is not limited to the stainless steel, but the cylindrical short pipe can be molded using other plastic materials; the material of the flexible tube is also not limited to the silicon rubber, but the flexible tube can be molded using other elastomers; and the size of the opening of the flexible tube and the cylindrical short pipe can be freely set depending on the needs of the conveyance of the object.

### [Reference Numerals]

1, 1a: cylindrical short pipe
2, 2a: connector
3, 3a: flexible tube
4, 4a: expansion portion
5, 5a: tapered face
6, 6a: annular projection
7, 7a: step portion
8, 8a: dovetail groove
9, 9a: protrusion portion
10, 10a: cylindrical short pipe
11, 11a: expansion portion
12, 12a: annular ring portion
13: flexible tube
14: padding portion for reinforcement

## Claims

1. A joint structure for connecting a primary-side cylindrical short pipe and a secondary-side cylindrical short pipe to each other through which an object to be conveyed passes using a flexible cylindrical tube, wherein
annular expansion portions are formed integrally with opening edges facing each other on the primary-side and secondary-side cylindrical short pipes to have a larger dimension than an outer diameter of each of the cylindrical short pipes, respectively,
outer wall faces of the expansion portions are configured such that diameters thereof are gradually reduced from openings, respectively, and
end portions of the flexible cylindrical tube are attached to be covered on outer faces of the expansion portions, respectively.

2. The joint structure according to claim 1, wherein the expansion portions are formed of a solid material and are configured to have step portions formed at inner edges of openings thereof, respectively, and dovetail grooves formed in the step portions thereof, respectively, thereby including connectors made of a flexible material which are engaged airtightly with the step portions and the dovetail grooves and allow outer end faces to airtightly abut on opening edges of the expansion portions, respectively.

3. The joint structure according to claim 2, wherein the connectors are molded by silicon, respectively.

4. The joint structure according to claim 2 or 3, wherein the connectors are provided integrally with inner surfaces in the vicinity of openings of the flexible tube.

5. The joint structure according to any one of claims 1 to 3, wherein annular projections are formed at outer surfaces of the expansion portions, respectively, to prevent the flexible cylindrical tube from slipping off.

6. The joint structure according to claim 1, wherein the expansion portions are formed in a manner of winding widened opening edges outward.

7. The joint structure according to claim 6, wherein the flexible cylindrical tube includes annular padding portions for reinforcement on both of opening edges thereof.

8. The joint structure according to any one of claims 1 to 7, wherein the cylindrical short pipes are formed of stainless steel, respectively.
